# FASCICULE DE BREVET EUROPEEN

(11) **EP 0 552 071 B1**
(45) Date de publication et mention de la délivrance du brevet: **16.04.1997**
(21) Numéro de dépôt: 93400022.5
(22) Date de dépôt: 07.01.1993
(51) Int. Cl.: C09K 3/14, C09D 5/14, A01N 25/10

(54) **Utilisation d'un produit antidérapant et antifongique pour les sols et revêtements de sol**
Verwendung von einem fungiziden und rutschfesten Mittel in Fussböden und Fussbodenbeläge
Use of a fungicidal and anti-skid product in floors and floor coverings

(30) Priorité: 13.01.1992 FR 9200330
(43) Date de publication de la demande: 21.07.1993
(73) Titulaire: INSTITUT FRANCAIS DU PETROLE, 92502 Rueil-Malmaison (FR)
(72) Inventeur: Morlec, Jean, F-44600 Saint Nazaire (FR); Le Page, Jean-Francois, F-92500 Rueil Malmaison (FR)

(56) Documents cités:
- EP-A- 0 116 865
- EP-A- 0 270 129
- CH-A- 586 747
- GB-A- 1 457 869
- JP-A-03 161 275
- JP-A-52 112 886
- US-A- 2 204 466
- Derwent Publications Ltd., London, GB; AN 85-267424

## Description

L'invention concerne l'utilisation d'un produit qui, incorporé aux revêtements de sol, ciments, bitumes, agglomérés, dalles plastiques, ainsi que les revêtements de pont à bord des navires leur assure des propriétés d'une part antidérapante et d'autre part antifongique (ou fongicide), évitant la prolifération des algues, des mousses.

Ce produit est constitué par une zéolite particulière échangée avec un sel d'un métal.

Le produit est destiné principalement aux besoins des sols dans le bâtiment, l'urbanisme et la construction navale.

Les revêtements de sols, que ce soient dans les salles d'eau, les offices de restaurations, les salles de bain, les piscines, les saunas, partout dans les habitations où le sol peut être rendu glissant, en particulier par les projections d'eau, le produit "ZEOBACT"® peut apporter une solution durable aux conditions de sécurité des usagers.

C'est le cas également des installations portuaires, en particulier les criées de pêcheries où à l'humidité viennent s'ajouter la glace pilée et les algues.

Ce problème de revêtement se pose avec encore plus d'impératif sur les points de navires qui en plus des problèmes généraux perdent la majeure partie du temps leur assiette horizontale, rendant d'autant plus nécessaire les qualités antidérapantes du sol.

Les solutions apportées par les produits traditionnels (éclats de carbure de silicium par exemple) sont généralement satisfaisantes du point de vue antidérapant. Cependant à la longue, dans les milieux maritimes en particulier, se développe bien souvent sur les revêtements de sols une colonie de microorganismes qui forme une gangue, un film, sur les grains d'antidérapant et annihilent pratiquement toutes ses qualités initiales.

Le document EP-A-0.270.129 décrit l'utilisation comme antibiotique de zéolithe naturelle ou synthétique échangée avec des ions ammonium et des ions métalliques, mais rien n'est dit sur l'éventuelle propriété antidérapante de la zéolithe.

La demanderesse a cherché un produit présentant des performances antidérapantes identiques voire supérieures, mais surtout une efficacité rendue permanente par des qualités anti-mousse, anti-bactérienne suffisantes pour empêcher la prolifération de végétaux et la fixation de parasites qui rendent rapidement caduques les propriétés initiales du produit.

Plus précisément, l'utilisation d'un produit, objet de la présente demande, est l'utilisation d'une zéolite naturelle, clinoptilolite ou mordénite, échangée avec au moins un sel par exemple de Cu, de Zn ou d'Ag.

Le produit, de granulométrie convenable, selon les applications, est incorporé à la surface du revêtement de sol par les procédés de ragréage classiques. Le produit s'utilise de préférence en granulés.

Il peut également être incorporé dans la masse des revêtements de sol, commes les dalles de granulats de caoutchouc fabriqués en épaisseur de quelques millimètres.

Des applications sous forme de peinture peuvent être envisagées pour certaines applications.

Les particules de zéolites spécifiques contenant des ions métalliques offrent donc des caractéristiques antidérapantes efficaces, l'indice de dureté des zéolites dans l'échelle de Mohs étant proche de celui de quartz, et des qualités biocides durables.

Les zéolites utilisables dans le cadre de cette invention sont les zéolites mordénite et clinoptilolite, pures ou en mélange qui présentent une morphologie minérale suffisamment solide pour pouvoir former des grains solides et résistant à l'abrasion. Les ions métalliques, qui confèrent à la zéolite les propriétés antibactériennes seront introduits par échange ionique selon les méthodes traditionnelles.

Les ions métalliques habituellement utilisés pour leurs propriétés antibactériennes sont les suivants : Ag, Cr, Cu, Fe, Hg, Ni, Zn, Sn et parmi ceux-ci, plus couramment Ag, Cu et Zn. Ces métaux peuvent d'ailleurs être employés seuls ou en mélange.

Le processus d'échange intervient généralement sur la zéolite avant son incorporation au constituant du revêtement de sol que l'on souhaite traiter. Cependant dans certains cas, l'incorporation de la zéolite naturelle pourra être effectuée tout d'abord, l'échange ionique étant obtenu en définitive par un trempé de finition du matériau formé (dans le cas de dalles par exemple).

Le support minéral est broyé en granulés de taille optimale, assurant une bonne surface d'échange mais en éliminant les particules fines par tamisage efficace.

Tout moyen de broyage et de tamisage classiques conviennent.

Les granulés installés dans des paniers de toile métallique sont immergés dans une solution idoine le temps nécessaire à l'échange ionique, puis essorés par égouttage ensuite de quoi ils passeront dans un tunnel de séchage.

On incorpore dans le sol ou le revêtement de sol, environ 100 ppm à 10% en poids dudit produit, de préférence 1 à 10%.

## Revendications

1. Utilisation d'un produit antidérapant et antifongique pour les sols et revêtements de sol constitué par au moins une zéolite naturelle échangée avec une solution d'un ion métallique du type Ag, Cr, Cu, Fe, Hg, Ni, Zn, Sn, seul ou d'un mélange de plusieurs d'entre eux, la teneur pondérale dudit produit dans le sol ou revêtement de sol étant comprise entre 100 ppm et 10%, la zéolite utilisée étant une clinoptilolite ou une mordénite.

2. Utilisation d'un produit selon la revendication 1 dans lequel le métal est l'argent, le cuivre ou le zinc.

3. Utilisation d'un produit selon l'une des revendications 1 à 4 dans lequel la teneur pondérale de ce produit dans le sol ou revêtement de sol est comprise entre 1 et 10 %.

## Patentansprüche

1. Verwendung eines rutschfest machenden und fungiziden Produktes für Böden und Bodenbeläge, das aus wenigstens einem natürlichen Zeolith besteht, der mit einer Lösung eines Metalliones vom Typ Ag, Cr, Cu, Fe, Hg, Ni, Zn, Sn einzeln oder in einer Mischung von mehreren davon ausgetauscht ist, wobei der Gewichtsgehalt des Produktes in dem Boden oder in dem Bodenbelag zwischen einschließlich 100 ppm und 10 % enthalten ist und der verwendete Zeolith ein Clinoptilolith oder ein Mordenit ist.

2. Verwendung eines Produktes nach Anspruch 1, worin das Metall Silber, Kupfer oder Zink ist.

3. Verwendung eines Produktes nach einem der Ansprüche 1 bis 2, bei welchem der Gewichtsgehalt dieses Produktes im Fußboden oder Fußbodenbelag zwischen einschließlich 1 und 10 % enthalten ist.

## Claims

1. Use of a non-slip and anti-fungal product for floors and floor coverings, constituted by at least one natural zeolite which is exchanged with a solution of a metal ion of the type Ag, Cr, Cu, Fe, Hg, Ni, Zn or Sn, used alone or as a mixture of a plurality thereof, the weight content of said product in the floor or floor covering being in the range 100 ppm to 10%, and the zeolite being a clinoptilolite or a mordenite.

2. Use of a product according to claim 1, in which the metal is silver, copper or zinc.

3. Use of a product according to any one of claims 1 to 2, in which the weight content of this product in the floor or floor covering is in the range 1% to 10%.
